# FASCICULE DE BREVET EUROPEEN

(11) **EP 2 376 769 B1**
(45) Date de publication et mention de la délivrance du brevet: **02.05.2018**
(21) Numéro de dépôt: 09805805.0
(22) Date de dépôt: 30.12.2009
(51) Int. Cl.: F16H 61/44, F03C 1/04, F03C 1/40, F03C 1/247, B60K 6/12

(54) **CIRCUIT DE TRANSMISSION HYDRAULIQUE**
HYDRAULIKGETRIEBEKREIS
HYDRAULIC TRANSMISSION CIRCUIT

(30) Priorité: 31.12.2008 FR 0859171
(43) Date de publication de la demande: 19.10.2011
(73) Titulaire: Poclain Hydraulics Industrie, 60411 Verberie (FR)
(72) Inventeur: SOUPLY, Jean-Pierre, F-60300 Senlis (FR); CHARRIER, Guillaume, F-37150 La Croix en Touraine (FR); LEMAIRE, Gilles, F-60280 Margny les Compiègne (FR)
(74) Mandataire: Intès, Didier Gérard André
(86) Numéro de dépôt international: PCT/FR2009/052719
(87) Numéro de publication internationale: WO 2010/076542

(56) Documents cités:
- EP-A- 1 319 836
- GB-A- 2 055 987
- US-A- 4 807 519
- US-A- 5 836 231
- US-A1- 2001 003 948

## Description

L'invention concerne un circuit de transmission hydraulique comprenant :
- au moins un premier et un deuxième moteurs élémentaires hydrauliques associés pour un même entraînement, chaque moteur élémentaire comportant deux enceintes secondaires, une pour l'alimentation et une pour l'échappement ;
- au moins deux conduits principaux, respectivement pour l'alimentation en fluide et l'échappement de fluide ;
- un distributeur de fluide pour distribuer le fluide depuis lesdits conduits principaux jusqu'auxdits moteurs élémentaires via les enceintes secondaires ;
- un système de commande des moteurs élémentaires.

Par 'moteur élémentaire hydraulique', on désigne ici soit un moteur hydraulique, soit un sous-moteur d'un moteur hydraulique, ce sous-moteur étant une partie du moteur hydraulique capable lorsqu'elle est alimentée seule, de fournir un couple moteur (non nul) à l'organe de sortie du moteur, et cela quelle que soit la position angulaire de cet organe de sortie par rapport à la structure fixe du moteur. De préférence, le couple délivré par le sous-moteur est sensiblement indépendant de la position angulaire de l'organe de sortie du moteur par rapport à la structure fixe du moteur. Il s'ensuit qu'un sous-moteur, lorsqu'il est alimenté seul, est capable de fournir un travail similaire à celui fourni par le moteur complet, mais avec une vitesse de rotation et un couple différents de ceux du moteur complet, la cylindrée du sous-moteur étant différente de celle du moteur complet. L'invention vise en particulier un circuit comprenant des moteurs élémentaires hydrauliques de type à pistons radiaux. Ces moteurs élémentaires comportent notamment des pistons coulissants dans des cylindres, les cylindres étant disposés radialement autour de l'axe de rotation du moteur.

Par exemple, les circuits de transmission hydraulique que vise l'invention peuvent servir à l'entraînement en translation d'un engin ou à l'entraînement d'un outil porté par un engin. Les moteurs élémentaires peuvent alors être des moteurs distincts, par exemple, pour entraîner des roues distinctes de l'engin.

Au sens de l'invention, deux moteurs élémentaires associés pour un même entraînement sont deux moteurs élémentaires reliés par un moyen mécanique, par exemple un arbre, une courroie, un engrenage, ou encore agissant sur un même élément pour provoquer un même effet sur ou par rapport à celui-ci. Par exemple, les deux moteurs élémentaires entraînent deux roues distinctes d'un véhicule, et ainsi agissent toutes deux sur un même sol pour faire avancer le véhicule dont le circuit fait partie.

De manière générale, la vitesse requise pour les moteurs intégrés à de tels circuits de transmission est de plus en plus élevée, en particulier pour assurer de manière rapide le transfert de l'engin entre deux sites d'utilisation de ce dernier, ou bien le transfert de l'outil entre deux positions de travail. Ces moteurs doivent donc pouvoir à la fois générer un fort couple, pour pouvoir correctement assurer les fonctions de l'engin ou de l'outil en conditions de travail, et pouvoir présenter une vitesse de sortie élevée, pour les raisons indiquées ci-dessus.

Pour atteindre ces deux objectifs, il serait possible d'assurer l'alimentation des moteurs élémentaires avec une pompe de dimensions très importantes, permettant en particulier de délivrer un débit de fluide élevé pour entraîner les moteurs élémentaires à vitesse élevée dans une cylindrée permettant l'obtention d'un fort couple de sortie. Toutefois, il serait extrêmement coûteux d'être ainsi contraint de surdimensionner la pompe et le moteur thermique qui l'entraine.

Dans le cas où les moteurs élémentaires font partie d'un même moteur, il est connu d'utiliser un moteur hydraulique présentant deux, voire trois cylindrées distinctes de fonctionnement. Un tel moteur peut par exemple comporter une plus grande cylindrée développant un fort couple pour le travail de l'engin ou de l'outil entraîné par ce moteur, et une plus petite cylindrée qui permet un fonctionnement à plus grande vitesse. Les contraintes évoquées ci-dessus font que la petite cylindrée est en général très notablement diminuée par rapport à la grande cylindrée, le moteur développant un faible couple dans cette petite cylindrée. Cette plus petite cylindrée est en général utilisée pour assurer un déplacement rapide de l'engin ou de l'outil entraîné par ce moteur.

Cependant, le nombre de cylindrées distinctes est en général limité, et ainsi, il est difficile de réaliser un circuit de transmission hydraulique présentant un nombre élevé de cylindrées, ayant grâce à cela, une grande souplesse de fonctionnement permettant de varier les vitesses et le couple moteur afin d'adapter le fonctionnement de l'engin en fonction des circonstances. Le document US 5 836 231 décrit un circuit de transmission hydraulique qui comprend deux moteurs élémentaires hydrauliques associés pour un même entrainement.

Un premier objet de l'invention est de proposer un circuit de transmission hydraulique du type présenté en préambule, et bénéficiant d'une souplesse d'utilisation élevée grâce à la possibilité de fonctionnement avec de multiples cylindrées.

Cet objectif est atteint grâce au fait que le distributeur de fluide comporte des moyens de valve reliés aux deux enceintes secondaires du premier moteur élémentaire, ces moyens de valve étant aptes à mettre chacune des enceintes secondaires du premier moteur élémentaire en communication avec l'un ou l'autre des conduits principaux, indépendamment de l'autre enceinte secondaire. En d'autres termes, pour chacune des enceintes secondaires du premier moteur élémentaire, quelle que soit le conduit principal avec lequel l'autre enceinte secondaire est mise en relation, les moyens de valve sont aptes à mettre en relation l'enceinte secondaire considérée du premier moteur élémentaire avec un parmi au moins deux circuits principaux du circuit de transmission hydraulique.

Grâce à cela, le premier moteur élémentaire peut être mis dans un mode de fonctionnement moteur, antagoniste ou inactif, indépendamment du mode de fonctionnement des autres moteurs élémentaires.

Les possibilités de mise en communication des enceintes secondaires du premier moteur élémentaire avec l'un ou l'autre des conduits principaux, offertes par les moyens de valve, permettent d'exploiter ce moteur élémentaire dans l'un des quatre modes de fonctionnement suivants :
- Inactif haute pression, les deux enceintes étant portées à la pression du circuit principal de plus haute pression (on parlera pour simplifier de la 'haute pression de la pompe') ;
- Inactif basse pression, les deux enceintes étant portées à la pression du circuit principal de plus basse pression (on parlera pour simplifier de la 'basse pression de la pompe') ;
- moteur, les deux enceintes étant respectivement à la haute et à la basse pression de la pompe et le couple délivré étant moteur dans un sens d'entrainement souhaité pour l'engin dont le circuit fait partie ;
- antagoniste, les deux enceintes étant respectivement à la haute et à la basse pression de la pompe et le couple délivré étant un couple appliqué dans le sens opposé au sens d'entrainement souhaité pour l'engin dont le circuit fait partie.

La structure du circuit selon l'invention permet le fonctionnement des moteurs élémentaires du circuit dans au moins trois cylindrées non nulles distinctes, la cylindrée du circuit désignant ici la somme (algébrique) des cylindrées des moteurs élémentaires. Si Cyl1 est la cylindrée du premier moteur élémentaire, et Cyl2 la cylindrée cumulée des autres moteurs élémentaires du circuit, ces cylindrées valent Cyl2+Cyl1, Cyl2 et Cyl2-Cyl1, respectivement pour les modes moteur, inactif et antagoniste du premier moteur élémentaire. Ainsi, le circuit présente un nombre de cylindrée relativement élevé, ce qui permet d'éviter un dimensionnement excessif des pompes d'alimentation en fluide hydraulique ou de leurs moteurs d'entrainement.

On précise enfin que chaque moteur élémentaire parmi le premier et le deuxième moteur élémentaire comporte une structure fixe et un organe de sortie, et est capable lorsqu'il est alimenté seul, de fournir un couple moteur non nul à cet organe de sortie, quelle que soit la position angulaire de ce dernier par rapport à la structure fixe du moteur élémentaire. Il s'ensuit qu'un moteur élémentaire ne peut être agencé autour d'un cylindre unique contenant un piston, et monté à rotation relative par rapport à une came sur laquelle le piston agirait radialement. Un ensemble ainsi agencé ne peut pas en effet délivrer un couple moteur non nul quelle que soit sa position angulaire.

Dans un mode de réalisation de l'invention, le système de commande comporte une table d'activation, qui indique ou spécifie et permet de déterminer les modes de fonctionnement des différents moteurs élémentaires en fonction d'une cylindrée souhaitée, chaque mode de fonctionnement étant choisi parmi moteur, antagoniste ou inactif. Une telle table d'activation peut être envisagée dans tout circuit dont les moyens de valve permettent de placer différents moteurs élémentaires en mode moteur, antagoniste, ou inactif. La cylindrée totale du circuit est obtenue en ajoutant ou soustrayant les cylindrées respectives des moteurs élémentaires en mode moteur ou antagoniste.

Le rôle de la table d'activation peut être mieux compris en considérant par exemple un circuit comprenant un moteur avec deux sous-moteurs de cylindrées respectives Cyl1 et Cyl2. Le nombre de cylindrées exploitables du circuit est présenté par la table d'activation suivante :

| Sous-moteur 1 | | | Sous-moteur 2 | | | Cylindrée |
|---|---|---|---|---|---|---|
| ES 11 | ES 12 | | ES 21 | ES 22 | | |
| 0 | 0 | Inactif BP | 0 | 0 | Inactif BP | 0 |
| 0 | 0 | Inactif BP | 1 | 1 | Inactif HP | 0 |
| 1 | 1 | Inactif HP | 0 | 0 | Inactif BP | 0 |
| 1 | 1 | Inactif HP | 1 | 1 | Inactif HP | 0 |
| 1 | 0 | Moteur | 1 | 0 | Moteur | Cyl1 +Cyl2 |
| 1 | 0 | Moteur | 0 | 0 | Inactif BP | Cyl1 |
| 1 | 0 | Moteur | 1 | 1 | Inactif HP | Cyl1 |
| 0 | 0 | Inactif BP | 1 | 0 | Moteur | Cyl2 |
| 1 | 1 | Inactif HP | 1 | 0 | Moteur | Cyl2 |
| 1 | 0 | Moteur | 0 | 1 | Antagoniste | Cyl1-Cyl2 |
| 0 | 1 | Antagoniste | 0 | 1 | Antagoniste | -Cyl1-Cyl2 |
| 0 | 1 | Antagoniste | 0 | 0 | Inactif BP | -Cyl1 |
| 0 | 1 | Antagoniste | 1 | 1 | Inactif HP | -Cyl1 |
| 0 | 0 | Inactif BP | 0 | 1 | Antagoniste | -Cyl2 |
| 1 | 1 | Inactif HP | 0 | 1 | Antagoniste | -Cyl2 |
| 0 | 1 | Antagoniste | 1 | 0 | Moteur | -Cyl1+Cyl2 |

dans laquelle :
- les enceintes secondaires du premier et du deuxième sous-moteur sont notées respectivement ES11, ES12 et ES21, ES22 ;
- il est indiqué 1 pour une enceinte reliée au conduit principal à haute pression, et 0 pour une enceinte reliée au conduit principal à basse pression ;
- un moteur élémentaire est en mode moteur lorsque sa première enceinte secondaire est reliée au conduit principal à haute pression, et la deuxième enceinte secondaire est reliée au conduit principal à basse pression ;
- il est indiqué Inactif BP ou Inactif HP respectivement pour un moteur élémentaire dont les enceintes secondaires sont reliées au circuit principal à la basse pression (0) ou à la haute pression (1).

Le circuit présente ainsi quatre cylindrées différentes, réversibles, et symétriques, ainsi que différents modes d'inactivation. Cette table d'activation fait apparaître que chaque moteur élémentaire peut être placé dans l'un ou l'autre des modes de fonctionnement possibles (moteur, antagoniste, inactif haute pression (HP) ou inactif basse pression (BP), dont résulte la cylindrée totale du circuit dans le mode de fonctionnement choisi.

Par ailleurs, dans le circuit selon l'invention, la commande des moyens de valve est choisie de préférence de manière à exploiter les différentes cylindrées du moteur afin d'optimiser la gestion du moteur, en fonction du comportement désiré, celui-ci pouvant être spécifié notamment par une vitesse de rotation, un débit de fluide consommé, un couple délivré, etc. Cette optimisation de la commande est favorisée par les différents perfectionnements suivants :
Dans un mode de réalisation, le système de commande est apte à opérer automatiquement une pluralité de changements de cylindrée suivant un ordre prédéfini. Par exemple, un mode de fonctionnement du moteur que l'on souhaite atteindre (défini par une vitesse, une cylindrée, etc.) peut être donné comme consigne au système de commande du moteur ; celui-ci détermine alors la séquence des cylindrées à mettre en oeuvre pour mettre le moteur dans le mode de fonctionnement souhaité. En particulier, dans un mode de réalisation, le système de commande est apte à piloter les moyens de valve de manière à ajuster progressivement la cylindrée en fonction au moins d'une vitesse de rotation du moteur et d'une consigne transmise au circuit, notamment une consigne de vitesse, en passant par au moins une cylindrée intermédiaire entre la cylindrée en cours et la cylindrée correspondant à la vitesse requise.

En particulier, dans un mode de réalisation, le système de commande est apte à opérer automatiquement une pluralité de changements de cylindrée suivant un ordre prédéfini, en fonction au moins d'une vitesse de rotation du moteur et d'une consigne de vitesse ou d'accélération transmise au système de commande. Par exemple, pour augmenter progressivement la vitesse, alors que le couple d'entrainement requis diminue, le système de commande diminue progressivement la cylindrée du moteur en faisant fonctionner celui-ci successivement dans des cylindrées de plus en plus petites. De préférence, le système de commande comprend dans ce but une table ordonnée des différentes cylindrées et des modes de fonctionnement associés des différents moteurs élémentaires.

Dans un mode de réalisation, le système de commande fait varier sensiblement simultanément un débit fourni à un moteur élémentaire et la cylindrée, afin de maintenir constante la vitesse de ce moteur élémentaire.

Avantageusement, dans les modes de réalisation précédemment cités qui permettent des changements automatiques de cylindrée, le conducteur de l'engin est déchargé d'opérations de sélection de la cylindrée, qui sont prises en charge par le système de commande.

Dans un mode de réalisation, dans le circuit, le distributeur de fluide comporte au moins deux premières valves de distribution, reliées respectivement aux deux enceintes secondaires du premier moteur élémentaire, chaque première valve de distribution étant apte à mettre l'enceinte secondaire à laquelle elle est reliée en communication avec l'un ou l'autre des conduits principaux, indépendamment de l'autre première valve. Avantageusement, dans un mode de réalisation lesdites premières valves sont intégrées dans un carter du premier moteur élémentaire.

Dans un perfectionnement de ce mode de réalisation, les enceintes secondaires d'au moins deux moteurs élémentaires sont reliées et aptes à être raccordées aux conduits principaux par une seule et même valve de distribution. La mise en commun de moyens, ici une valve, permet de réduire la complexité, le poids, et le coût du circuit.

Dans un mode de réalisation, au moins une desdites valve de distribution est une valve comportant au moins deux positions et au moins trois orifices, un premier orifice relié à une enceinte secondaire, un deuxième et un troisième orifices reliés respectivement à deux conduits principaux du circuit ; la valve présentant une première position dans laquelle elle relie l'enceinte secondaire à un premier conduit principal, et une deuxième position dans laquelle elle relie ladite enceinte secondaire à un autre conduit principal. Dans certains cas, la valve de distribution peut en outre présenter d'autres positions, par exemple des positions dans lesquelles elle relie la chambre du cylindre non pas à des conduits principaux reliés à la pompe, mais par exemple à des conduits principaux reliés à des accumulateurs de pression.

Cette valve de distribution peut notamment être une valve hydraulique, comportant un organe mobile actionné en fonction d'une pression de fluide dans une chambre de pilotage de la valve hydraulique ; la pression régnant dans cette chambre de pilotage étant régie par une électrovalve.

Dans un mode de réalisation, le premier et le deuxième moteurs élémentaires sont des sous-moteurs d'un même moteur, solidaires d'un même organe de sortie. Dans certains modes de réalisation, l'ensemble des moteurs élémentaires sont des sous-moteurs du même moteur, tous solidaires de l'organe de sortie de celui-ci.

Dans un mode de réalisation, les premier et deuxième moteurs élémentaires entrainent deux organes de sortie distincts. Par exemple, les premier et deuxième moteurs élémentaires peuvent être attelés à des roues distinctes d'un même véhicule.

Dans un mode de réalisation, le premier moteur élémentaire a une cylindrée différente de celle d'un autre moteur élémentaire, mais de préférence voisine de celle-ci. Cet agencement permet de multiplier le nombre de cylindrées des moteurs élémentaires, par rapport au cas où la cylindrée du premier moteur élémentaire serait égale à celle de chacun des autres moteurs élémentaires. On notera notamment que, lorsque deux moteurs élémentaires ont des cylindrées voisines, s'ils sont utilisés en opposition, c'est-à-dire avec un moteur actif et l'autre antagoniste, ces deux moteurs élémentaires présentent avantageusement un très grand rapport d'ouverture, et cela sans que la plus petite cylindrée d'un moteur élémentaire ne soit particulièrement faible. (Le rapport d'ouverture étant pour un tel circuit, le rapport entre la plus grande et la plus petite cylindrée du circuit).

Dans un mode de réalisation, le système de commande est apte à piloter les moyens de valve, de telle sorte que deux moteurs élémentaires exercent des couples de sens opposés. En d'autres termes, un des moteurs élémentaire est en mode moteur, alors qu'un autre est en mode antagoniste. La cylindrée apparente de l'ensemble constitué par ces deux moteurs élémentaires est égale à la différence de leurs cylindrées respectives. Si les moteurs élémentaires ont des cylindrées proches, la cylindrée résultante est donc très faible. Cela permet donc, avantageusement, de réaliser de manière simple un moteur ayant un très grand rapport d'ouverture, lorsque les deux moteurs élémentaires font partie d'un même moteur.

Par exemple, on peut concevoir un circuit comprenant principalement un moteur avec deux sous-moteurs, la plus grande des cylindrées des deux sous-moteurs n'excédant pas 1,5 fois la plus petite. Cet agencement permet d'obtenir un très grand rapport d'ouverture du moteur. Si la plus grande cylindrée vaut par exemple 1,5 x C, ou C est la plus petite cylindrée, le rapport d'ouverture vaut (1,5C + C)/(1,5C - C), soit 5.

Dans un mode de réalisation, les moteurs élémentaires sont homocinétiques. De tels moteurs élémentaires se caractérisent par le fait qu'un débit de pompe constant entraine une vitesse de rotation constante pour toute position angulaire relative des organes rotatifs par rapport aux parties fixes du moteur élémentaire. L'utilisation de moteurs élémentaires homocinétiques apporte au moteur une stabilité de fonctionnement et une durée de vie accrues. Ces propriétés sont particulièrement importantes pour des moteurs de faibles vitesses telles que le moteur d'entrainement des roues, sur un engin.

D'autre part, un circuit hydraulique selon l'invention peut être mis en oeuvre dans différents modes de fonctionnement, dans lesquels un au moins moteur élémentaire est en mode inactif. Ce mode inactif peut être optimisé de la manière suivante :
Dans un mode de réalisation, le distributeur de fluide comporte, pour au moins un moteur élémentaire, des moyens d'inactivation aptes à relier ce dernier de manière continue au conduit principal ayant une pression choisie parmi la plus basse pression et la plus haute pression des conduits principaux. En fonction des circonstances, il peut être en effet préférable de choisir l'inactivation à basse pression, ou à haute pression. Lorsque le moteur élémentaire est relié au conduit principal de plus basse pression, le couple résiduel qu'il engendre est minimisé grâce au fait que la pression de fluide est minimale dans les organes internes du moteur élémentaire. C'est pourquoi en général on choisit ce type d'inactivation. Cependant, pendant des phases de freinage, on peut préférer l'inactivation à haute pression, pour bénéficier du couple de freinage supplémentaire engendré par le moteur élémentaire inactivé à haute pression.

Dans ce mode de réalisation, les moyens d'inactivation sont aptes à relier le moteur élémentaire inactivé au circuit principal qui est à la pression choisie de manière continue. Cela signifie que les moyens d'activation peuvent opérer des commutations de circuit en agissant sur les moyens de valve, ou toute autre action nécessaire, de manière à ce qu'à tout instant, du moins pendant la période durant laquelle le moteur élémentaire reste inactivé, la pression choisie soit appliquée aux enceintes secondaires du moteur élémentaire inactivé.

Les moyens d'inactivation peuvent être réalisés de différentes manières :
Dans un mode de réalisation, lorsque les moteurs élémentaires sont des sous-moteurs d'un même moteur, les moyens d'inactivation comportent des moyens de détection du sens de rotation du moteur, ladite pression choisie étant sélectionnée en fonction du sens de rotation du moteur et du sens d'une commande de vitesse ou d'accélération appliquée au moteur. En effet, connaissant le sens de rotation du moteur, et le sens de commande (de vitesse ou d'accélération), le système de commande peut en déduire le sens du débit de fluide traversant le moteur et ainsi, déterminer celui des conduits principaux du circuit avec lequel il est opportun de relier le ou les moteurs élémentaires inactifs. Avantageusement avec cette solution technique pour la sélection de la plus basse pression, le moteur ne nécessite pas de capteur de pression.

Dans un mode de réalisation, les moyens d'inactivation comportent un détecteur, apte à détecter le conduit principal à la plus basse des pressions parmi les conduits principaux. Par exemple, les moyens d'inactivation comportent des capteurs de pression disposés dans les deux conduits principaux, pour détecter la plus basse des pressions dans ces circuits afin de maximiser le rendement des moteurs élémentaires dans les phases moteur et les phases de freinage.

Par ailleurs, dans un mode de réalisation, le passage en mode inactif d'un ou plusieurs moteurs élémentaires du moteur, peut être réalisé grâce au fait qu'au moins pour un moteur élémentaire, les pistons sont aptes à être rétractés, de telle sorte qu'ils sont dégagés de la came. Grâce à cela, les pistons - ou les cylindres dans lequel ils se trouvent - ne génèrent plus de couple de freinage, et le rendement s'en trouve amélioré.

Dans un mode de réalisation, le système de commande est apte à piloter les moyens de valve, de manière à inverser le sens de rotation d'un organe de sortie du moteur sans inverser le sens d'entrée et de sortie du fluide dans le moteur. Par exemple, le système de commande pilote les moyens de valve de telle sorte que la somme des cylindrées des moteurs élémentaires en mode antagoniste, initialement inférieure, devienne supérieure à la somme des cylindrées des moteurs élémentaires en mode moteur, du fait que certains moteurs élémentaires passent du mode moteur au mode antagoniste. Ce changement provoque alors l'inversion du sens de rotation de l'organe de sortie du moteur. Cette inversion du sens de rotation du moteur se fait sans inverser le sens du débit de fluide entraîné par la pompe. Avantageusement, il est ainsi possible d'utiliser une pompe simple, et le recours à une pompe à inversion de débit n'est pas nécessaire. Le système de commande permet ainsi d'inverser le sens de rotation du premier moteur élémentaire, sans affecter les modes de fonctionnement des autres moteurs élémentaires. Cette propriété permet notamment l'utilisation du circuit pour la conduite d'engin, lorsque les moteurs élémentaires entraînent des roues différentes d'un engin : Il s'agit alors de manoeuvre de type 'skid-steer'.

De manière analogue, dans un mode de réalisation, le système de commande est apte à piloter les moyens de valve de manière à maintenir le sens de rotation d'un organe de sortie du moteur constant, au cours d'une inversion du sens d'entrée et de sortie du fluide à travers le moteur. Un tel fonctionnement est surtout utile lorsque le circuit est alimenté par des accumulateurs de pression, avec lesquels le sens du fluide est susceptible de changer lorsque l'un des accumulateurs est vide ou atteint sa pression maximale. Le système de commande maintient alors autant que possible constant le régime des moteurs élémentaires, et avantageusement masque le changement d'alimentation de ceux-ci, ce changement pouvant entrainer une inversion du sens d'entrée/sortie du fluide dans le moteur.

Dans un mode de réalisation, le système de commande d'au moins un moteur élémentaire est disposé à proximité immédiate de celui-ci ou intégré à celui-ci.

Dans un mode de réalisation, les moyens de valve sont reliés en outre aux deux enceintes secondaires d'au moins un autre moteur élémentaire, ces moyens de valve étant aptes à mettre chacune des enceintes secondaires dudit au moins un autre moteur élémentaire en communication indifféremment avec l'un ou l'autre des conduits principaux, indépendamment des autres enceintes secondaires. Le circuit ainsi réalisé dispose ainsi avantageusement de multiples cylindrées, à savoir jusqu'à huit cylindrées non nulles différentes, c'est-à-dire quatre cylindrées dans un sens, et quatre cylindrées dans le sens contraire, si les deux moteurs élémentaires ont des cylindrées différentes l'un de l'autre.

Dans un mode de réalisation, dans le circuit, au moins un premier moteur élémentaire est attelé à un premier organe de déplacement d'un engin, et au moins un deuxième moteur élémentaire est attelé à un deuxième organe de déplacement d'un engin ; le système de commande du premier moteur étant apte à commander une rotation du premier moteur et ainsi, du premier organe de déplacement, à une vitesse différente ou de sens opposé à celle du deuxième organe de déplacement. Le fait que les organes de déplacement soient entrainés avec des vitesses différentes, voire de sens opposés, conduit le véhicule à tourner. Si les organes de déplacement sont simplement entrainés à des vitesses différentes, le véhicule suit une courbe ; s'ils sont entrainés en sens inverse, le véhicule tourne sur place. Ces possibilités sont particulièrement avantageuses pour les engins ou véhicules disposant d'un espace réduit pour les manoeuvres, comme par exemple certains engins agricoles.

L'utilisation de ces moteurs permet également d'effectuer un système d'anti-patinage en réduisant la cylindrée d'un moteur (voire en l'annulant) en cas de vitesse trop importante de la roue par rapport aux autres roues du véhicule.

Dans un mode de réalisation, le circuit comporte en outre deux accumulateurs de pression, et comporte au moins quatre conduits principaux ; deux premiers conduits principaux sont reliés auxdits deux accumulateurs de pression ; deux deuxièmes conduits principaux sont aptes à être reliés à une source de fluide sous pression autre que lesdits accumulateurs de pression ; et les moyens de valve sont aptes à relier les enceintes secondaires des moteurs élémentaires d'un premier groupe de moteurs élémentaires avec les premiers conduits principaux, et à relier les enceintes secondaires d'autres moteurs élémentaires constituant un deuxième groupe de moteurs élémentaires avec les deuxièmes conduits principaux. Avantageusement, les deux accumulateurs de pression peuvent être utilisés pour stocker de l'énergie sous forme de pression de fluide, pendant les phases de freinage, et pour fournir un travail moteur, pendant les phases motrices. La méthode d'inversion décrite précédemment permet alors en gardant le même sens de rotation d'inverser le débit du moteur afin que celui-ci soit alimenté par la réserve d'énergie en mode accélération et de remplir cette même réserve en mode freinage.

Les accumulateurs de pression permettent aussi un découplage entre le fonctionnement de la source de fluide sous pression alimentant le moteur, et le fonctionnement du moteur lui-même.

Enfin, le nombre de cylindrées important de ce moteur permet de choisir le couple (moteur ou frein) à appliquer sur l'arbre du moteur. Il est également possible sans ajout de valve supplémentaire de désactiver totalement le moteur en désactivant (passage en mode inactif) l'ensemble des moteurs élémentaires.

Dans un autre mode de réalisation du circuit selon l'invention avec deux accumulateurs de pression, le circuit comporte seulement deux circuits principaux, et comporte en outre un sélecteur interposé sur les conduits principaux et présentant au moins deux positions, une première position qui permet de relier les moteurs élémentaires aux deux accumulateurs de pression, et une deuxième position qui permet de relier les moteurs élémentaires à une source de fluide sous pression autre que les accumulateurs de pression. Dans ce cas, les accumulateurs de pression sont prévus pour pouvoir se substituer, temporairement ou en permanence, à la pompe ou à la source de fluide sous pression fournissant aux moteurs élémentaires l'énergie qui leur permet de fonctionner.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un circuit de transmission hydraulique selon l'invention, dans une configuration générique ;
- la figure 2 est une vue schématique d'un circuit de transmission hydraulique selon l'invention, dans un mode de réalisation avec un moteur comportant deux moteurs élémentaires et quatre valves de distribution;
- la figure 3 est une vue schématique d'un circuit de transmission hydraulique selon l'invention, comprenant un moteur comportant trois moteurs élémentaires et quatre valves de distribution ;
- la figure 4 est une coupe longitudinale d'un moteur comprenant deux sous-moteurs, pouvant être utilisé dans un circuit selon l'invention ;
- la figure 5 est une coupe axiale, au niveau du bloc-cylindres, du moteur représenté en figure 4, suivant la coupe V-V ;
- la figure 6 est une vue schématique d'un circuit de transmission hydraulique selon l'invention, comprenant deux accumulateurs de pression et une pompe ;
- les figures 7A et 7B sont des vues schématiques d'un autre circuit de transmission hydraulique selon l'invention comprenant deux accumulateurs de pression et une pompe, respectivement dans deux régimes de fonctionnement ;
- les figures 8A à 8E sont des vues schématiques d'un circuit hydraulique selon l'invention comportant quatre moteurs, exploités dans différentes configurations de fonctionnement.

On notera que sauf mention contraire, les circuits présentés peuvent comporter des éléments supplémentaires non représentés, et notamment les éléments habituels et bien connus dans les circuits hydrauliques, tels que des pompes de gavage, des dispositifs anti-surpression, etc.

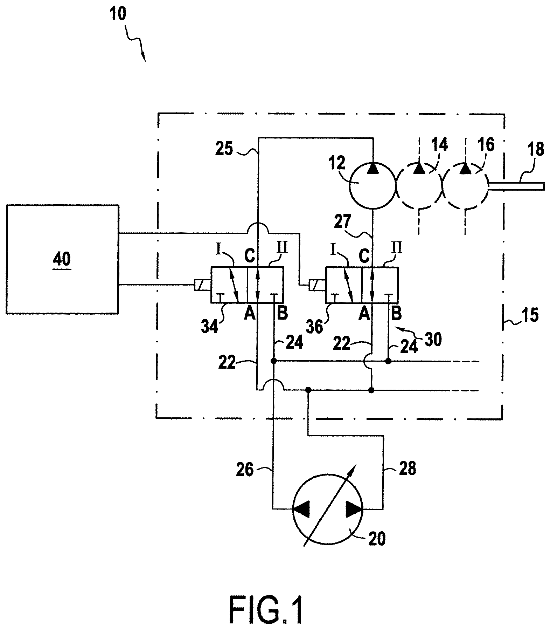

En faisant référence à la figure 1, un circuit de transmission hydraulique selon l'invention va maintenant être décrit.

Ce circuit 10 comporte un moteur 15, comprenant trois moteurs élémentaires 12, 14, 16. Ces trois moteurs élémentaires délivrent leurs couples respectifs sur un même arbre de sortie18.

Le circuit 10 comporte en outre une pompe hydraulique 20, et deux circuits principaux 26 et 28 reliés aux deux orifices principaux de celle-ci, prévus pour l'alimentation et l'échappement de fluide des différents moteurs élémentaires du circuit 10.

Le circuit 10 comporte également un distributeur de fluide 30 pour distribuer le fluide depuis les conduits principaux 26 et 28 vers les moteurs élémentaires 12, 14, et 16.

Les conduites permettant l'alimentation et l'échappement de fluide de et vers les moteurs élémentaires 14 et 16 ne sont pas représentées, car différents circuits sont connus pour alimenter de tels moteurs élémentaires 14 et 16 à partir d'une pompe hydraulique 20, via des conduits principaux 26, 28. Tout en restant dans le cadre de l'invention, n'importe quel sous-circuit connu peut être utilisé pour l'alimentation et l'échappement de fluide de ces deux moteurs élémentaires 14 et 16.

Le distributeur de fluide 30 comporte deux valves de distribution 34, 36. Ces deux valves sont des électrovannes, identiques l'une à l'autre. Chacune de ces valves 34 et 36 comporte trois orifices A, B, C. L'orifice A est relié par une canalisation 22 à un premier conduit principal 28 ; l'orifice B est relié par une canalisation 24 au deuxième conduit principal 26 ; l'orifice C de la valve 34 est relié à une première enceinte secondaire 25 du moteur élémentaire 12 ; l'orifice C de la valve 36 est relié à l'autre enceinte 27 du moteur élémentaire 12. Chacune de ces valves 34, 36 comporte un tiroir mobile, ayant deux positions stables. La position du tiroir est commandée par un actionneur électrique non représenté, piloté par un système de commande 40, central au circuit de transmission hydraulique 10.

Chacune des valves 34, 36 présente deux positions stables I et II. En position I, la valve relie l'enceinte du moteur élémentaire à laquelle elle est reliée, avec la canalisation 22 et donc avec le premier conduit principal 28 ; en position II, la valve relie l'enceinte du moteur élémentaire à laquelle elle est reliée, avec la canalisation 24 et donc avec l'autre conduit principal 26.

Chacune des valves 34 et 36 peut être pilotée par le système de commande 40 indépendamment de l'autre valve. Grâce à cela, le moteur élémentaire 12 peut être utilisé de la manière suivante : Il peut être inactif, et ne délivrer aucun couple moteur ou de freinage, lorsque les deux valves sont en position I, ou en position II.

Lorsque la valve 34 est dans en position I et la valve 36 en position II, le moteur délivre un couple dans un premier sens ; lorsque les positions de ces deux valves 34 et 36 sont inversées, le moteur délivre un couple de sortie inverse.

Ainsi, selon le cas, le moteur élémentaire a soit un couple et une cylindrée nuls; ou, il présente un couple moteur qui s'ajoute au couple délivré par les autres moteurs élémentaires ; ou encore, il délivre un couple antagoniste, qui vient en réduction du couple délivré par les autres moteurs élémentaires.

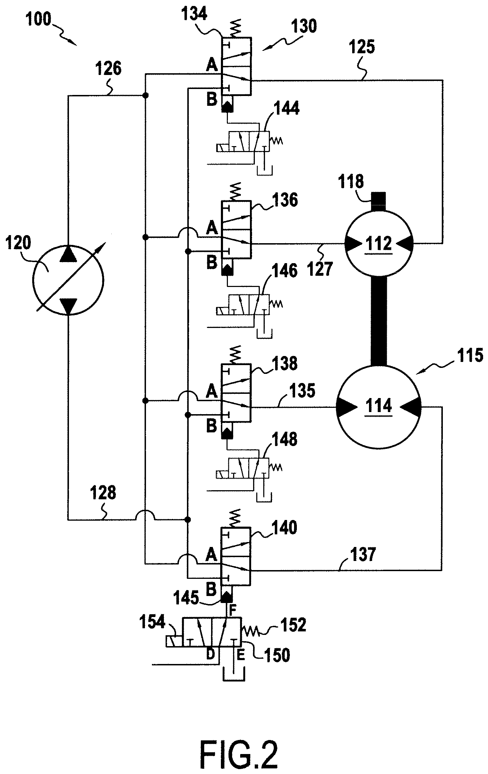

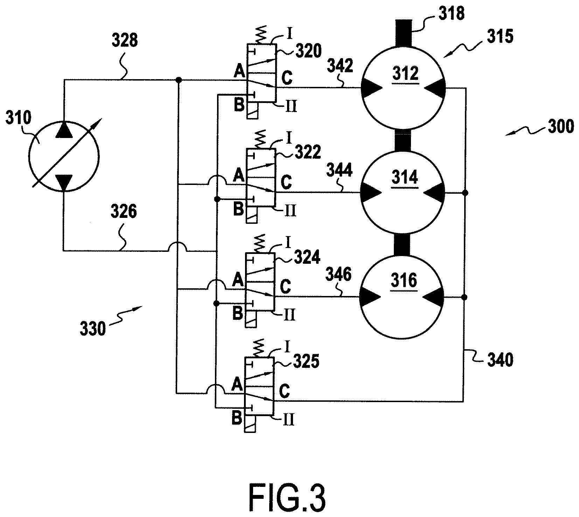

En faisant référence aux figures 2 et 3, deux modes de réalisation de circuits de transmission hydraulique selon l'invention vont maintenant être décrits.

Conventionnellement, les éléments de ces circuits analogues à ceux présentés sur la figure 1 portent une référence numérique égale à celle de l'élément de la figure 1, augmentée d'un multiple de 100, et ne sont présentés à nouveau qu'en cas de besoin.

Sur la figure 2 est présenté un circuit de transmission hydraulique 100 comportant une pompe 120, alimentant un moteur 115 ayant deux moteurs élémentaires 112 et 114, via deux conduits principaux 126 et 128. Les moteurs élémentaires 112 et 114 sont couplés à un arbre de sortie 118.

Comme le dispositif de la figure 1, le dispositif 100 comporte un distributeur de fluide 130. Alors que le moteur 15 ne comportait (a priori) que pour un moteur élémentaire 12, deux valves de distribution reliées aux enceintes d'alimentation et d'échappement de celui-ci, le moteur 115 au contraire présente de telles dispositions pour ses deux moteurs élémentaires 112 et 114. Il comporte en effet des moyens de valve formés essentiellement par quatre valves de distribution 134, 136, 138 et 140.

Les valves 134 et 136 sont reliées aux enceintes secondaires 125 et 127 du moteur élémentaire 112, et les valves 138 et 140 sont reliées aux enceintes secondaires 135 et 137 du moteur élémentaire 114.

Ces quatre valves ont sensiblement la même structure que les électrovalves 34 et 36 précédemment citées, à cela près qu'elles sont des valves hydrauliques, dont le tiroir est piloté par des chambres de commande hydrauliques et non par un actionneur électrique.

La pression dans ces chambres de commande hydrauliques est elle-même gouvernée par des électrovalves pilotes identiques 144, 146, 148 et 150, qui pilotent les pressions dans les chambres de commande en fonction de consignes transmises par le système de commande.

Pour simplifier, seule l'électrovalve 150 va être décrite en détail.

L'électrovalve 150 présente trois orifices D, E, F.

Les orifices D et E sont des orifices d'entrée. L'orifice D est relié à une ligne dans laquelle règne une pression de commande ; l'orifice E est relié par canalisation à un réservoir sans pression. L'orifice de sortie F de la valve 150 est relié à la chambre de commande hydraulique 145 de la valve hydraulique 140. L'électrovalve 150 comporte en outre un ressort de rappel 152, et un actionneur électrique 154 qui agit en sens opposé sur le tiroir mobile de l'électrovalve 150.

Chacune des valves 134, 136, 138 et 140 est reliée, par ses deux orifices d'entrée A et B, aux deux conduits principaux 126 et 128 du dispositif 100. Les valves 134 et 136 sont reliées par leurs orifices de sortie C respectivement aux deux enceintes secondaires 125,127 du moteur élémentaire 112. Les valves 138 et 140 sont reliées par leurs orifices de sortie C respectivement aux deux enceintes secondaires 135,137 du moteur élémentaire 114. Ainsi, les quatre valves 134-136 ; 138 -140 sont aptes à mettre respectivement les moteurs élémentaires 112 et 114 dans l'un des quatre modes de fonctionnement suivants : inactif haute pression ou basse pression, les enceintes secondaires étant reliées soit à la haute, soit à la basse pression de la pompe ; moteur ; antagoniste.

Les deux moteurs élémentaires 112 et 114 ne présentent pas la même cylindrée. Aussi, le moteur 115 présente avantageusement quatre cylindrées différentes. On notera en outre qu'il ne présente pas de sens préférentiel de fonctionnement ; et qu'enfin, que l'emploi d'une pompe réversible n'est pas nécessaire, puisqu'avec une direction constante de flux du débit de fluide, le système de commande en association avec les valves 134, 136, 138 et 140 permet l'inversion du sens de rotation du moteur.

La figure 3 présente un autre circuit de transmission hydraulique selon l'invention.
Le circuit hydraulique 300 comporte une pompe 310, un moteur 315, comportant trois moteurs élémentaires 312, 314 et 316, couplés à un arbre de sortie 318 du moteur 315.

Chacun des moteurs élémentaires 312, 314 et 316 comporte respectivement deux enceintes pour son alimentation et son échappement. Les pressions dans ces six enceintes sont gouvernées par un distributeur de fluide 330 du circuit de transmission hydraulique. Le distributeur de fluide 330 comprend quatre valves de distribution 320, 322, 324 et 325. Ces valves sont des électrovalves dont la structure interne est identique à celle des valves 34 et 36 (détaillées en relation avec la figure 1).

Les orifices A et B des valves 320, 322, 324 et 325 sont reliés respectivement avec les deux conduits principaux 326 et 328, ces derniers étant reliés aux orifices principaux de la pompe 310. Dans une première position I, les valves 320, 322 et 324 mettent en communication le conduit principal 326 avec les premières enceintes secondaires 342,344 et 346 des moteurs élémentaires 312, 314 et 316. Dans leurs deuxièmes positions II, les valves 320, 322 et 324 mettent en communication le conduit principal 328 avec les premières enceintes secondaires 342,344 et 346 des moteurs élémentaires 312, 314 et 316.

Les deuxièmes enceintes secondaires des trois moteurs élémentaires 312, 314 et 316 sont reliées, et sont mises en relation par une conduite 340 avec l'orifice C de la valve 325. Cette valve 325 présente deux positions. Dans la première position I, prise par défaut, la valve 325 met en relation le conduit principal 326 avec la canalisation 340 et donc avec les deuxièmes enceintes secondaires des moteurs élémentaires 312, 314 et 316. Dans sa deuxième position II, la valve 325 relie le conduit principal 328 avec la canalisation 340 et donc avec les deuxièmes enceintes secondaires des moteurs élémentaires 312, 314 et 316.

Cet agencement de circuit hydraulique donne aux trois moteurs élémentaires des rôles identiques. En utilisant seulement quatre valves à deux positions, il permet de disposer de trois cylindrées actives dans chaque sens, obtenues en ajoutant une, deux ou trois des cylindrées respectives des trois moteurs élémentaires.

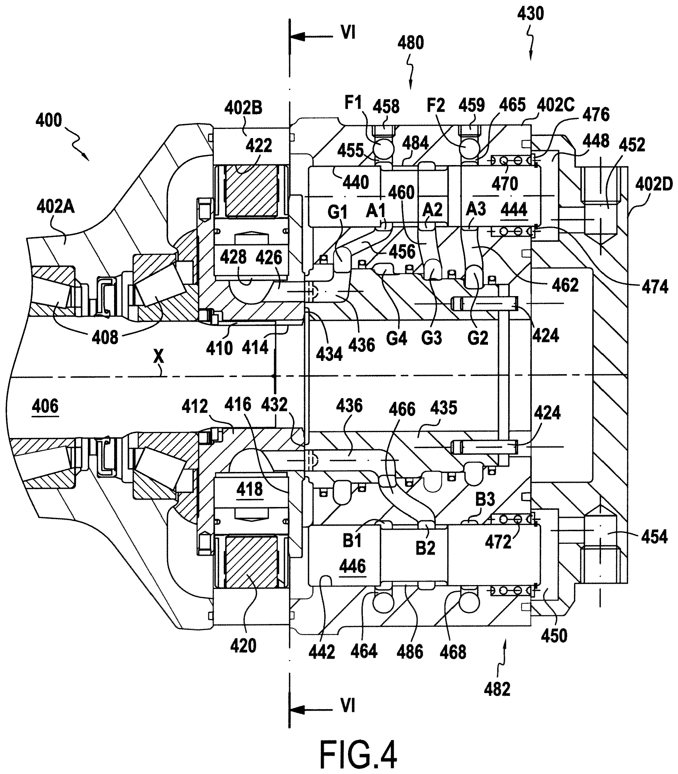

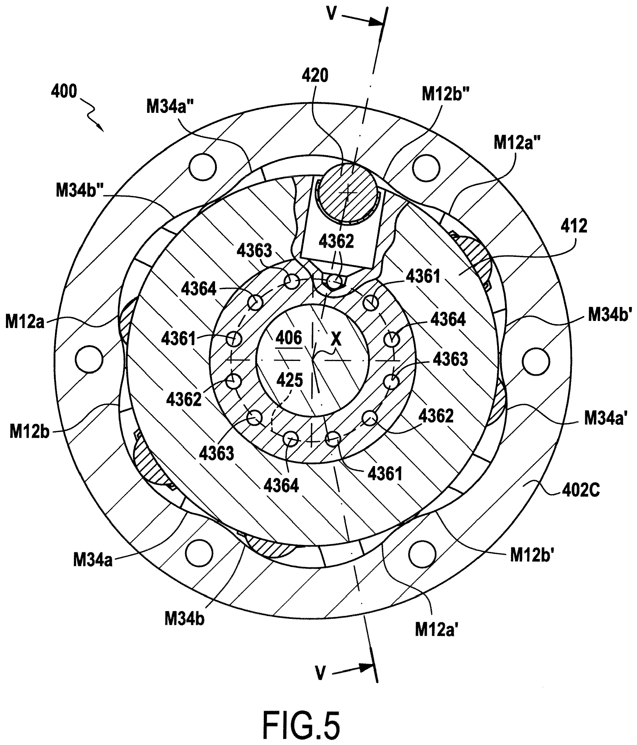

En faisant référence aux figures 4 et 5, un moteur 400 adapté pour une mise en oeuvre de l'invention sous la forme d'un moteur hydraulique, va maintenant être présenté.

Le moteur hydraulique 400 comprend :
- un carter 402 constitué par quatre parties 402A, 402B, 402C et 402D assemblées par des vis non représentées;
- un arbre de sortie 406 monté à rotation, autour d'un axe géométrique X, par rapport au carter 402, au moyen de paliers à roulement coniques 408 et muni de cannelures 410 disposées sur son extrémité contenue à l'intérieur dudit carter 402 ;
- un bloc-cylindres 412, muni de cannelures intérieures 414, qui coopèrent avec les cannelures 410 de l'arbre de sortie 406 pour rendre solidaires en rotation ces deux pièces, ce bloc-cylindres 412 étant contenu à l'intérieur du carter 402 et comportant huit cylindres 416 disposés radialement, et angulairement régulièrement espacés ;
- des pistons 418, montés coulissants dans lesdits cylindres 416, un par cylindre, chacun muni, à son extrémité extérieure au cylindre correspondant, d'un rouleau 420 rotatif susceptible d'être en appui sur la surface interne ondulée de la partie 402B du carter, conformée en une came 422 à six lobes ;
- un distributeur interne de fluide 430, comprenant notamment une glace de distribution 435 comportant une face plane 432 perpendiculaire à l'axe X et en appui sur une face plane 434, également perpendiculaire à l'axe X, dont est muni le bloc-cylindres 412 ; la glace de distribution 435 étant rendue solidaire vis-à-vis de la rotation, de la partie 402C du carter, et donc de la came 422, au moyen de pions 424, et comportant en outre sur sa face radialement externe quatre gorges G1, G2, G3 et G4, coaxiales à l'axe X ;
- des conduits de cylindres 426, un par cylindre, reliant les chambres 428 délimitées par les cylindres 416 et les pistons 418 correspondant, à la face plane 434 du bloc-cylindres 412, dans laquelle ils débouchent par des orifices de cylindres régulièrement espacés, en étant centrés sur un cercle coaxial 425 à l'axe X ;
- des conduits de distribution 436 aménagés dans la glace de distribution 435, et débouchant dans la face plane 432 de celle-ci par des orifices centrés également sur le cercle 425, les conduits de distribution 436 étant au nombre de douze soit un conduit par rampe de lobe de la came, montante ou descendante ; les conduits de distribution 436 étant reliés chacun à une des gorges G1 à G4, de telle sorte que chaque conduit de cylindre 426 est amené pendant la rotation du moteur à communiquer successivement avec des conduits de distribution 436 reliés successivement aux gorges G1, G2, G3, G4 puis à nouveau G1, G2, G3, G4, etc. - ou l'inverse en fonction du sens de rotation du moteur - ;
- deux alésages 440 et 442, aménagés dans la partie 402C du carter, et débouchant de part et d'autre de celui-ci suivant l'axe X ; deux tiroirs coulissants 444 et 446 de sélection de la cylindrée étant montés respectivement dans les alésages 440 et 442 ;
- deux chambres de commande 448 et 450 pour les tiroirs respectivement 444 et 446, aménagées dans des alésages percés dans la face du carter 402D située du côté du carter 402C en face des alésages 440 et 442, ces chambres 448 et 450 recevant respectivement une extrémité des tiroirs 444 et 446 et étant en outre reliées à deux conduits externes non représentés par des conduites de liaison 452 et 454 ;
- deux gorges F1 et F2, coaxiales à l'axe X du moteur, aménagées dans le carter 402C ; la gorge F1 communiquant par un raccord 458 avec un conduit externe non représenté, et la gorge F2 communiquant par un raccord 459 avec un conduit externe non représenté ;
- trois gorges A1, A2, et A3, aménagées dans la partie 402C du carter, coaxiales à l'alésage 440, la gorge A1 communiquant, d'une part, par un conduit 455 avec la gorge F1, et d'autre part par un conduit 456 avec la gorge G1; la gorge centrale A2 communiquant par un conduit 460 avec la gorge G3 ; et la gorge A3 communiquant, d'une part, par un conduit 462 avec la gorge G4, et d'autre part, par un raccord 465 avec la gorge F2 ;
- trois gorges B1, B2, et B3, aménagées dans la partie 402C du carter, coaxiales à l'alésages 442, la gorge B1 communiquant par un conduit 464 avec la gorge F1; la gorge centrale B2 communiquant par un conduit 466 avec la gorge G4, et la gorge B3 communiquant par un conduit 468 avec la gorge F2 ;
- deux ressorts hélicoïdaux 470 et 472, enroulés autour des tiroirs 444 et 446 dans des parties élargies des alésages respectivement 440 et 442 ; les ressorts étant à une extrémité en appui sur le fond desdites parties élargies, et de l'autre, étant bloqués à l'extrémité des tiroirs 444 et 446 par des circlips 474 associés à des rondelles 476 ; les ressorts ayant un effet antagoniste à celui de la pression de fluide à l'intérieur des chambres de commande 448 et 450.

Les raccords 458 et 459 sont prévus pour être reliés aux orifices principaux d'une pompe hydraulique, de manière à fournir l'alimentation et l'échappement du moteur en fluide sous pression. Les raccords 452 et 454 sont prévus pour être reliés à un système de commande du moteur 400, apte à délivrer du fluide sous pression haute, ou basse (nulle) en fonction de la position souhaitée pour les tiroirs 444 et 446 respectivement.

Les tiroirs 444 et 446, conjointement avec les gorges A1, A2 et A3, B1, B2 et B3, et les conduites de liaison associées, constituent deux valves de distribution 480 et 482, à deux positions chacune. Le tiroir 440 comporte une gorge large 484 et ainsi, dans une première position illustrée sur la figure 5, (tiroir 440 sur la gauche), la gorge 484 du tiroir 440 met en relation les gorges A1 et A2 et donc les gorges G1 et G3 (la gorge A3 restant raccordée à F2). Dans une deuxième position, la gorge 484 met en relation les gorges A2 et A3 et donc les gorges G3 et G2 (la gorge A1 restant raccordée à F1).

De même, le tiroir 446 comporte une gorge large 486 et ainsi, dans une première position illustrée sur la figure 5, (tiroir 446 sur la gauche), la gorge 486 du tiroir 446 met en relation les gorges B1 et B2, la gorge B3 restant raccordée à F2. Dans une deuxième position, la gorge 486 met en relation les gorges B2 et B3, la gorge B1 restant raccordée à F1.

Du fait de sa structure présentée précédemment, le moteur 400 présente deux moteurs élémentaires M12 et M34, chacun regroupant respectivement trois lobes de la came 422. Ainsi, la came se divise (voir figure 5) en douze demi-lobes montants ou respectivement descendants dans l'ordre suivant : M12a, M12b, M34a, M34b, M12a', M12b', M34a', M34b', M12a", M12b", M34a", M34b", dans lesquels les lobes M12xx font partie du premier moteur élémentaire M12, dont les enceintes secondaires sont les gorges 1 et 2 ; les lobes M34xx font partie du deuxième moteur élémentaire M34, dont les enceintes secondaires sont les gorges 3 et 4. Les demi-lobes dont le nom comprend 'a' sont des demi-lobes montants, alors que ceux dont le nom comprend 'b' sont des demi-lobes descendants. Sur la figure 5, les conduits de distribution 436 sont nommés en fonction de la gorge avec laquelle ils sont reliés : Les conduits 4361 sont reliés avec la gorge 1 ; les conduits 4362 avec la gorge 2, les conduits 4363 avec la gorge 3, et les conduits 4364 avec la gorge 4.

Dans le moteur 400, les gorges G1 et G2 sont reliées de manière permanente respectivement aux deux orifices principaux de la pompe. En revanche, les gorges G3 et G4 sont reliées, chacune, soit à l'un soit à l'autre de ces orifices, en fonction de la position des tiroirs 444 et 446. Aussi, le moteur 400 est un moteur ayant trois cylindrées actives de fonctionnement : Lorsque les gorges G3 et G4 sont mises à la même pression, le moteur élémentaire M34 est inactif et ne délivre aucun couple. La cylindrée est celle C12 du moteur élémentaire M12. Lorsque les gorges G3 et G4 sont à des pressions différentes, la cylindrée C34 du moteur élémentaire M34 selon le cas s'ajoute ou se retranche de celle du moteur élémentaire M12. Ainsi, la cylindrée du moteur 400 est alors soit C12+C34, soit C12-C34.

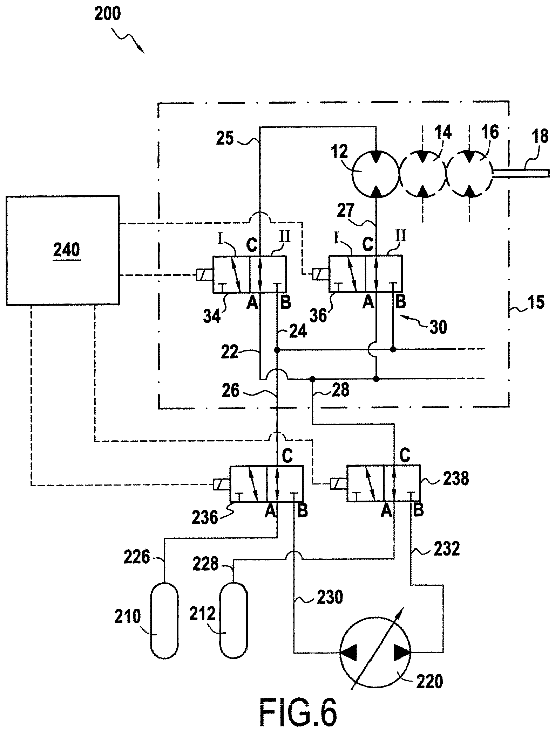

Le moteur 400 représente un moteur particulièrement simple de mise en oeuvre de l'invention. Plus généralement, le carter 402C peut être aménagé pour accueillir une ou deux autres valves de distribution similaires aux valves 480 et 482. Au lieu de relier directement les gorges G1 et G2 avec les conduits principaux du moteur F1 et F2, ce sont la ou les gorges centrales des tiroirs de cette ou ces valve(s) additionnelle(s) qui seront reliées respectivement avec les gorges G1 et G2. Les valves additionnelles permettront alors, en fonction de la position de leurs tiroirs respectifs, de mettre en relation G1 ou G2 avec l'un ou l'autre des conduits principaux. En faisant référence à la figure 6, un circuit de transmission hydraulique 200 selon l'invention, comportant deux accumulateurs de pression, et un dispositif de pompe constitué essentiellement par une pompe, va maintenant être présenté.

Le circuit 200 comporte un moteur 15 identique à celui du circuit 10 présenté en relation avec la figure 1. Cependant, l'agencement des circuits principaux 226, 228, 230, 232 du circuit 200 est différent de celui du circuit 10.

Cette différence est liée au fait que le circuit 200 est alimenté en fluide sous pression par deux sources de fluide sous pression, à savoir une pompe 220, et deux accumulateurs de pression 210 et 212. Deux valves de sélection 236 et 238 servent à sélectionner la source de fluide sous pression qui sera reliée aux circuits principaux 26 et 28 du moteur 15 :
La valve 236 est une valve à deux positions. Son orifice C est relié au conduit de distribution 26. Ses deux orifices A et B sont reliés respectivement à l'accumulateur de pression 210 et à un premier orifice principal de la pompe 220, via respectivement des conduits principaux 226 et 230. Elle permet donc de relier le conduit principal 26 soit avec l'accumulateur de pression 210, soit avec le premier orifice principal de la pompe 220.

La valve 238 est une valve à deux positions. Son orifice C est relié au conduit de distribution 28. Ses deux orifices A et B sont reliés respectivement à l'accumulateur de pression 212 et à un deuxième orifice principal de la pompe 220, via respectivement des conduits principaux 228 et 232. Elle permet donc de relier le conduit principal 28 soit avec l'accumulateur de pression 212, soit avec le deuxième orifice principal de la pompe 220.

Les valves 236 et 238 sont des électrovalves commandées par une unité de commande 240. Celle-ci contrôle également le moteur 15, et notamment les valves 34 et 36 de celui-ci, à l'instar de l'unité de commande 40 présentée en relation avec la figure 1. L'unité de commande 240 permet d'utiliser l'énergie stockée sous forme de fluide sous pression dans les accumulateurs de pression, et de stocker de l'énergie pendant les phases de freinage.
Grâce à la cette utilisation des accumulateurs de pression, le circuit 200 présente un rendement énergétique élevé, une partie de l'énergie étant récupérée et stockée dans les accumulateurs de pression lors de phases de freinage, puis réutilisée par la suite.

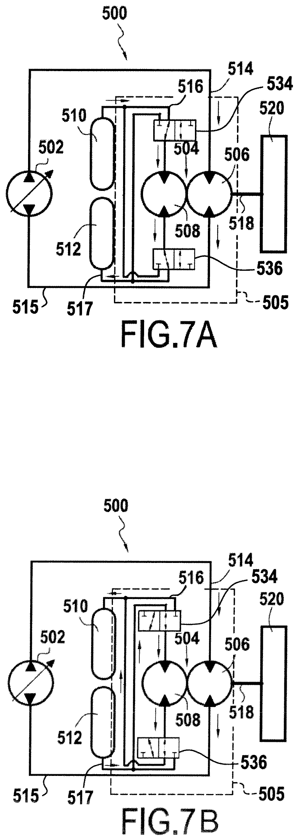

En faisant référence aux figures 7A et 7B, un circuit hydraulique 500 selon l'invention, dans un mode de réalisation différent du circuit hydraulique 200 de la figure 6, va maintenant être présenté dans deux modes de fonctionnement.

Le circuit hydraulique 500 comporte une pompe hydraulique 502 à débit variable ; un moteur hydraulique 504 avec deux moteurs élémentaires 506 et 508 ; deux accumulateurs de pression 510 et 512, respectivement à haute et à basse pression. Les orifices principaux de la pompe 502 sont reliés par deux conduits principaux 514 et 515 aux orifices d'alimentation et d'échappement du moteur élémentaire 506. Les orifices des accumulateurs 510 et 512 sont reliés par deux autres conduits principaux 516 et 517 au moteur élémentaire 508.

Le moteur 504 comporte un arbre de sortie 518, auquel les deux moteurs élémentaires 506 et 508 fournissent un couple ; cet arbre 518 est attelé à une roue 520.

Le carter 505 du moteur 504 renferme les deux moteurs élémentaires 506 et 508, ainsi que les valves de distribution 534, 536 du moteur élémentaire 508.

Le fonctionnement de ce circuit hydraulique, et notamment les rôles respectifs des deux moteurs élémentaires 506 et 508, qui ont des alimentations en fluide différentes, est illustré par les figures 7A et 7B.

La figure 7A illustre le fonctionnement en marche avant du moteur, dans un mode de fonctionnement avec restitution de l'énergie stockée dans les accumulateurs de pression.

Le moteur élémentaire 508, sous l'effet de la pression du fluide délivré par l'accumulateur de pression 510, qui traverse le moteur élémentaire 508 avant de rejoindre l'autre accumulateur de pression 512 fournit un premier couple sur l'arbre 518. De manière classique, le moteur élémentaire 506, sous l'effet du débit de fluide impulsé par la pompe 502, applique un deuxième couple à l'arbre 518. Suivant les pressions établies dans le circuit 514 aux bornes du moteur élémentaire 506, ce deuxième couple peut s'ajouter ou se retrancher au premier couple du moteur élémentaire 508 pour obtenir le couple désiré sur la roue 520.

La figure 7B présente une situation inverse, de stockage d'énergie. Le moteur élémentaire 508 renvoie du fluide sous pression dans l'accumulateur haute pression 510. Le couple nécessaire pour entraîner le moteur élémentaire 508 dans cette situation peut être fourni par la roue quand le véhicule est en phase de freinage. Comme on l'a vu précédemment, le couple généré par le moteur élémentaire 506 peut s'ajouter ou se retrancher au couple de la roue de manière à compenser la différence entre le couple désiré de freinage de la roue et le couple nécessaire pour entrainer le moteur élémentaire 508 qui remplit l'accumulateur.

Il est aussi possible de stocker de l'énergie pendant une phase d'accélération du véhicule, l'énergie prélevée ne pouvant donc pas être convertie en énergie cinétique du véhicule. Dans ce cas, le moteur élémentaire 506 doit fournir en même temps le couple à la roue 520 pour permettre l'accélération du véhicule ainsi que le couple nécessaire au moteur 508 pour remplir l'accumulateur. Cette configuration peut être utile pour stocker de l'énergie quand les besoins en accélération du véhicule sont faibles voir nuls (roulage à vitesse constante), et pour utiliser cette énergie dans une autre circonstance dans laquelle des besoins en couple à la roue importants nécessitent l'action des deux moteurs 506 et 508.

Le recours à l'un ou l'autre des modes de fonctionnement détaillés précédemment est choisi en fonction notamment du remplissage respectif des accumulateurs 510 et 512. Lorsque l'accumulateur haute pression 510 commence à être vide, il est possible de prévoir une phase de remplissage, même si cela pénalise la puissance disponible sur l'arbre 518 de sortie du moteur.

D'autres modes de fonctionnement, dans lesquels l'un ou l'autre des moteurs élémentaires sont rendus inactifs, n'ont pas été détaillés.

En résumé, dans un tel circuit 500, le moteur élémentaire 506 peut être piloté par le système de commande (non représenté), pour fournir un couple moteur supplémentaire, c'est-à-dire un couple d'appoint ; pour fournir un couple de freinage supplémentaire ; il peut aussi rester inactif. La présence de ce moteur élémentaire 506, associé aux accumulateurs de pression 510 et 512, permet par exemple de disposer d'un couple supérieur, en phase motrice ou en phase de freinage, par rapport au couple qu'il serait possible d'avoir en utilisant uniquement et directement la pression de fluide délivrée par la pompe.

Plus généralement, les multiples cylindrées que présente le circuit hydraulique 500 permettent donc d'adapter le débit de fluide consommé par le moteur, ainsi que le couple délivré, en fonction de la pression disponible dans l'accumulateur de pression. Dans un tel circuit hydraulique 500, les multiples cylindrées permises par le moteur 504 selon l'invention sont alors particulièrement précieuses, car elles permettent de compenser le relatif manque de souplesse, lors de l'utilisation, des accumulateurs de pression 510 et 512.

Enfin, grâce à la souplesse d'inversion du sens de circulation de fluide aux orifices du moteur élémentaire 508, à tout moment cette inversion peut être commandée par les valves de distribution du moteur, sans que soit nécessaire une inversion du sens du débit de fluide dans le circuit. L'emploi d'une pompe réversible n'est pas nécessaire.

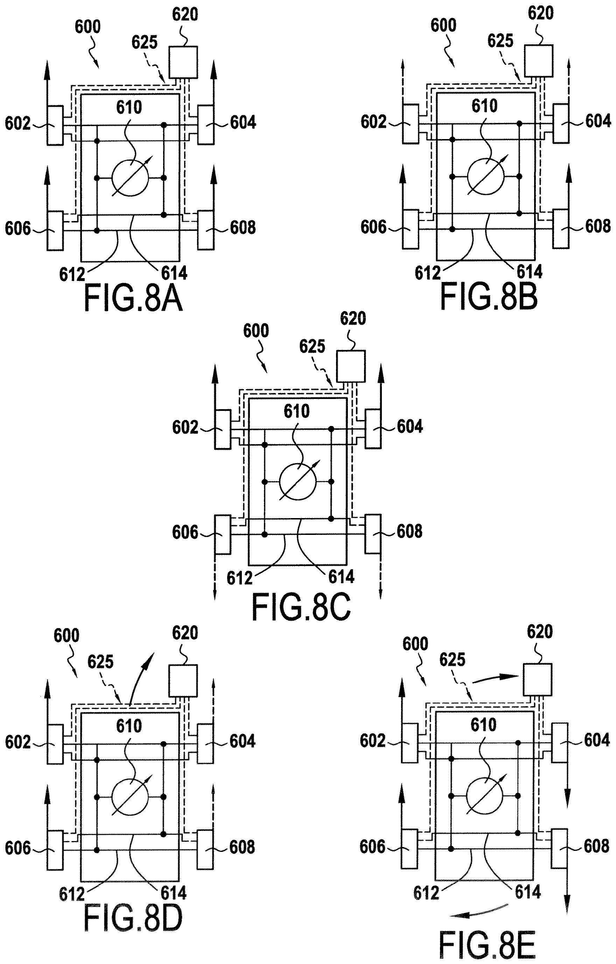

De plus, une pompe à débit fixe peut également être utilisée, du fait de la souplesse de fonctionnement du moteur conférée par ses multiples cylindrées. Les variations de vitesse et de couple sont réalisées notamment en effectuant des changements de cylindrée. En faisant référence aux figures 8A à 8E, cinq modes de fonctionnement d'un circuit hydraulique selon l'invention, dans un mode de réalisation différent des précédents, vont maintenant être présentés.

Le circuit hydraulique 600 présenté sur les figures 8A à 8E permet d'alimenter quatre moteurs hydrauliques 602, 604, 606 et 608, disposés respectivement dans les quatre roues d'un engin et permettant l'entrainement de celui-ci.

Conventionnellement, sur ces figures l'avant de l'engin est dirigé vers le haut de la feuille.

Le circuit 600 comporte une pompe centrale 610, et deux conduits principaux 612 et 614, distincts, reliés respectivement aux deux orifices principaux de la pompe. Le conduit principal 612 est relié à un premier orifice (d'alimentation ou d'échappement) de chacun des quatre moteurs 602, 604, 606 et 608 ; le conduit principal 614 est relié à un deuxième orifice de chacun des quatre moteurs.

Le circuit hydraulique est enfin équipé d'un système de commande central 620. Celui-ci transmet par des câbles 625 des consignes aux systèmes de commande respectifs des moteurs 602, 604, 606 et 608, qui élaborent sur cette base la commande des moyens de valve des différents moteurs 602, 604, 606 et 608.

Chacun des quatre moteurs 602, 604, 606 et 608 est un moteur conforme à l'invention. Chacun de ces moteurs peut transmettre à la roue à laquelle il est attelé un couple de sortie, qui est dit 'normal' s'il s'agit du couple maximal que peut délivrer le moteur, ou 'réduit' s'il s'agit d'une fraction de ce couple, la fraction étant inférieure à 1 strictement.

En outre le couple appliqué à une roue peut être moteur, s'il s'agit d'un couple appliqué dans le sens qui tend à faire avancer le véhicule vers l'avant lorsque toutes les roues appliquent un couple dans ce même sens ; il peut être un couple antagoniste, si ce couple est appliqué dans le sens inverse. On notera notamment que le couple de sortie appliqué aux roues respectives par chacun de ces moteurs peut être inversé par une simple commande du système de commande du moteur, sans qu'il soit nécessaire d'inverser le sens de circulation du fluide alimentant les moteurs.

Aussi, grâce au circuit hydraulique 600, les cinq modes d'entrainement du véhicule suivants, correspondant aux figures 8A à 8E, sont possibles :
- Marche avant normale (fig.8A). Les quatre moteurs délivrent, chacun, un couple moteur normal.
- Marche avant rapide (fig.8B). Les deux moteurs arrière 606 et 608 délivrent, chacun, un couple moteur normal ; les deux moteurs avant 602 et 604 délivrent un couple moteur réduit. La cylindrée totale du circuit est donc plus faible que dans le cas précédent, ce qui permet à l'engin d'atteindre une vitesse plus élevée.
- Marche avant très rapide (fig.8C). Les deux moteurs avant 602 et 604 délivrent, chacun, un couple moteur normal ; les deux moteurs arrière 606 et 608 délivrent un couple antagoniste réduit. La cylindrée totale du circuit est donc très faible, ce qui permet au véhicule d'atteindre une vitesse très élevée.
- Rotation à droite (fig.8D). Les deux moteurs de gauche 602 et 606 délivrent, chacun, un couple moteur normal ; les deux moteurs de droite délivrent, chacun, un couple moteur réduit. La différence de couple entraine une rotation vers la droite.
- Rotation sur place vers la droite (fig.8E). Les deux moteurs de gauche 602 et 606 délivrent, chacun, un couple moteur normal ; les deux moteurs de droite 604 et 608 délivrent, chacun, un couple antagoniste normal, ce qui entraine une rotation sur place du véhicule.

Naturellement, de nombreux autres modes de fonctionnement non représentés sont possibles pour le véhicule.

De plus l'utilisation de ce type de moteur permet en cas de patinage d'une des roues de réduire la cylindrée du moteur et conséquent son couple de sortie ce qui limitera le patinage de la roue, cette diminution de cylindrée peut aller jusqu'à une annulation du couple du moteur en désactivant l'ensemble des moteurs élémentaires de celui-ci.

## Revendications

1. Circuit de transmission hydraulique comprenant au moins deux conduits principaux (26,28), respectivement pour l'alimentation en fluide et l'échappement de fluide ;
le circuit de transmission hydraulique comprenant en outre :
- au moins un premier et un deuxième moteurs élémentaires hydrauliques (12,14,16;112,114;312,314,316;506,508;602,604,606,608) associés pour un même entrainement, chaque moteur élémentaire comportant deux enceintes secondaires (25,27;125,127,135,137;340,342,344,346; G1,G2,G3,G4 ;), une pour l'alimentation et une pour l'échappement ;
- un distributeur de fluide (30,130) pour distribuer le fluide depuis lesdits conduits principaux jusqu'auxdits moteurs élémentaires via leurs enceintes secondaires ;
- un système de commande (40) des moteurs élémentaires ;
et en ce que :
- le distributeur de fluide comporte des moyens de valve (34,36;134,136,138,140) reliés aux deux enceintes secondaires du premier moteur élémentaire ;
le circuit de transmission hydraulique **se caractérisant en ce que**:
- lesdits moyens de valve sont aptes à mettre chacune des enceintes secondaires du premier moteur élémentaire (12,112,312) en communication indifféremment avec l'un ou l'autre des conduits principaux, indépendamment de l'autre enceinte secondaire ; et
- le système de commande (40) est apte à piloter les moyens de valve de telle sorte que, dans un mode de fonctionnement du circuit, deux moteurs élémentaires exercent des couples de sens opposés.

2. Circuit selon la revendication 1, dont le système de commande comporte une table d'activation, qui spécifie et permet de déterminer les modes de fonctionnement des différents moteurs élémentaires (12,14,16) en fonction d'une cylindrée souhaitée, chaque mode de fonctionnement étant choisi parmi moteur, antagoniste ou inactif.

3. Circuit selon la revendication 1 ou 2, dans lequel le système de commande (40) est apte à opérer automatiquement une pluralité de changements de cylindrée suivant un ordre prédéfini, en fonction au moins d'une vitesse de rotation du moteur et d'une consigne de vitesse ou d'accélération transmise au système de commande (40).

4. Circuit selon l'une quelconque des revendications 1 à 3, dont le distributeur de fluide comporte au moins deux premières valves de distribution (34,36), reliées respectivement aux deux enceintes secondaires (25,27) du premier moteur élémentaire (12), chaque première valve de distribution étant apte à mettre l'enceinte secondaire à laquelle elle est reliée en communication avec l'un ou l'autre des conduits principaux (26,28), indépendamment de l'autre première valve.

5. Circuit selon la revendication 4, dans lequel les enceintes secondaires (340) d'aux moins deux moteurs élémentaires (312,314,316) sont reliées et aptes à être raccordées aux conduits principaux (326,328) par une seule et même valve de distribution (325).

6. Circuit selon l'une quelconque des revendications 1 à 5, dans lequel le premier et le deuxième moteurs élémentaires (12,14,16) sont des sous-moteurs d'un même moteur, solidaires d'un même organe de sortie (18).

7. Circuit selon l'une quelconque des revendications 1 à 5, dont les premier et deuxième moteurs élémentaires (602,604) entrainent deux organes de sortie distincts.

8. Circuit selon l'une quelconque des revendications 1 à 7, dans lequel le premier moteur élémentaire (112) a une cylindrée différente de celle d'un autre moteur élémentaire (114).

9. Circuit selon l'une quelconque des revendications 1 à 8, dans lequel, Cyll étant une cylindrée du premier moteur élémentaire, Cyl2 étant une cylindrée cumulée des autres moteurs élémentaires, et une cylindrée du circuit étant égale à la somme des valeurs des cylindrées des moteurs élémentaires, le système de commande (40) est apte à piloter les moyens de valve dans trois modes de fonctionnement dans lesquels une cylindrée du circuit vaut respectivement Cyl2+Cyl1, Cyl2 et Cyl2-Cyl1, respectivement pour les modes moteur, inactif et antagoniste du premier moteur élémentaire.

10. Circuit selon l'une quelconque des revendications 1 à 9, dont les moteurs élémentaires sont homocinétiques.

11. Circuit selon l'une quelconque des revendications 1 à 10, dont le distributeur de fluide comporte, pour au moins un moteur élémentaire, des moyens d'inactivation aptes à relier ce dernier de manière continue au conduit principal ayant une pression choisie parmi la plus basse pression et la plus haute pression des conduits principaux.

12. Circuit selon la revendication 11, dont les moteurs élémentaires sont des sous-moteurs d'un même moteur, et dont les moyens d'inactivation comportent des moyens de détection du sens de rotation du moteur, ladite pression choisie étant sélectionnée en fonction du sens de rotation du moteur et du sens d'une commande de vitesse ou d'accélération appliquée au moteur.

13. Circuit selon l'une quelconque des revendications 1 à 12, dont le système de commande (40) est apte à piloter les moyens de valve (34, 36), de manière à inverser le sens de rotation d'un organe de sortie du moteur sans inverser le sens d'entrée et de sortie du fluide dans le moteur.

14. Circuit selon l'une quelconque des revendications 1 à 13, dans lequel le système de commande (40) est apte à piloter les moyens de valve (34, 36) de manière à maintenir le sens de rotation d'un organe de sortie du moteur constant, au cours d'une inversion du sens d'entrée et de sortie du fluide à travers le moteur.

15. Circuit selon l'une quelconque des revendications 1 à 14, dans lequel
- au moins un premier moteur élémentaire est attelé à un premier organe de déplacement d'un engin, et
- au moins un deuxième moteur élémentaire est attelé à un deuxième organe de déplacement d'un engin;
le système de commande du premier moteur étant apte à commander une rotation du premier moteur et ainsi, du premier organe de déplacement, à une vitesse différente ou de sens opposé à celle du deuxième organe de déplacement.

16. Circuit selon l'une quelconque des revendications 1 à 15, comportant en outre deux accumulateurs de pression ; comportant au moins quatre conduits principaux ; et dans lequel
deux premiers conduits principaux sont aptes à être reliés auxdits deux accumulateurs de pression ;
deux deuxièmes conduits principaux sont aptes à être reliés à une source de fluide sous pression autre que lesdits accumulateurs de pression ;
les moyens de valve sont aptes à relier les enceintes secondaires des moteurs élémentaires d'un premier groupe de moteurs élémentaires avec les premiers conduits principaux, et à relier les enceintes secondaires d'autres moteurs élémentaires constituant un deuxième groupe de moteurs élémentaires avec les deuxièmes conduits principaux.

## Patentansprüche

1. Hydraulischer Übertragungskreislauf, umfassend mindestens zwei Hauptleitungen (26, 28), für die Flüssigkeitszufuhr bzw. für die Flüssigkeitsabfuhr,
wobei der hydraulische Übertragungskreislauf ferner umfasst:
- mindestens einen ersten und einen zweiten elementaren Hydraulikmotor (12, 14, 16; 112, 114; 312, 314, 316; 506, 508; 602, 604, 606, 608), die für ein und denselben Antrieb kombiniert sind, wobei jeder elementare Motor zwei sekundäre Gehäuse (25, 27; 125, 127, 135, 137; 340, 342, 344, 346; G1, G2, G3, G4) umfasst, eines für die Zufuhr und eines für die Abfuhr,
- einen Flüssigkeitsverteiler (30, 130) zum Verteilen der Flüssigkeit von den Hauptleitungen zu den elementaren Motoren über ihre sekundären Gehäuse,
- ein Steuerungssystem (40) für die elementaren Motoren,
und wobei:
- der Flüssigkeitsverteiler Ventilmittel (34, 36; 134, 136, 138, 140) aufweist, die mit den beiden sekundären Gehäusen des ersten elementaren Motors verbunden sind,
wobei der hydraulische Übertragungskreislauf **dadurch gekennzeichnet ist, dass**:
- die Ventilmittel dazu geeignet sind, jedes der sekundären Gehäuse des ersten elementaren Motors (12, 112, 312) unabhängig von dem anderen sekundären Gehäuse in Verbindung mit dem einen oder anderen der Hauptleitungen zu bringen, und
- das Steuerungssystem (40) in der Lage ist, die Ventilmittel so zu steuern, dass in einer Betriebsart des Kreislaufs zwei elementare Motoren Drehmomente in entgegengesetzte Richtungen ausüben.

2. Kreislauf gemäß Anspruch 1, dessen Steuerungssystem eine Aktivierungstabelle aufweist, die die Betriebsarten der verschiedenen elementaren Motoren (12, 14, 16) in Abhängigkeit von einem gewünschten Hubvolumen spezifiziert und bestimmen lässt, wobei jede Betriebsart aus motorisch, antagonistisch oder inaktiv ausgewählt ist.

3. Kreislauf gemäß Anspruch 1 oder 2, wobei das Steuerungssystem (40) in der Lage ist, eine Vielzahl von Änderungen des Hubvolumens in einer vorbestimmten Reihenfolge automatisch auszuführen, abhängig von mindestens einer Motordrehzahl und einem Geschwindigkeits- oder Beschleunigungssollwert, der an das Steuerungssystem (40) übertragen wird.

4. Kreislauf gemäß einem der Ansprüche 1 bis 3, wobei der Flüssigkeitsverteiler mindestens zwei erste Verteilerventile (34, 36) aufweist, die jeweils mit den beiden sekundären Gehäusen (25, 27) des ersten elementaren Motors (12) verbunden sind, wobei jedes erste Verteilerventil in der Lage ist, das sekundäre Gehäuse, mit dem es verbunden ist, mit der einen oder der anderen der Hauptleitungen (26, 28) unabhängig von dem anderen ersten Ventil in Verbindung zu bringen.

5. Kreislauf gemäß Anspruch 4, wobei die sekundären Gehäuse (340) von mindestens zwei elementaren Motoren (312, 314, 316) miteinander verbunden und dazu in der Lage sind, mit den Hauptleitungen (326, 328) über ein einziges Verteilerventil (325) verbunden zu werden.

6. Kreislauf gemäß einem der Ansprüche 1 bis 5, wobei der erste und der zweite elementare Motor (12, 14, 16) Untermotoren ein und desselben Motors sind, die mit ein und demselben Abtriebselement (18) fest verbunden sind.

7. Kreislauf gemäß einem der Ansprüche 1 bis 5, wobei der erste und der zweite elementare Motor (602, 604) zwei getrennte Abtriebselemente antreiben.

8. Kreislauf gemäß einem der Ansprüche 1 bis 7, wobei der erste elementare Motor (112) ein anderes Hubvolumen aufweist als ein anderer elementarer Motor (114).

9. Kreislauf gemäß einem der Ansprüche 1 bis 8, wobei Cyl1 ein Hubvolumen des ersten elementaren Motors ist, Cyl2 ein kumulatives Hubvolumen der anderen elementaren Motoren ist, und ein Hubvolumen des Kreislaufs gleich der Summe der Hubvolumenwerte der elementaren Motoren ist, wobei das Steuerungssystem (40) in der Lage ist, die Ventilmittel in drei Betriebsarten zu steuern, wobei ein Hubvolumen des Kreislaufs jeweils Cyl2 + Cyl1, Cyl2 und Cyl2 - Cyl1 für die jeweiligen Betriebsarten motorisch, inaktiv und antagonistisch des ersten elementaren Motors beträgt.

10. Kreislauf gemäß einem der Ansprüche 1 bis 9, dessen elementare Motoren homokinetisch sind.

11. Kreislauf nach einem der Ansprüche 1 bis 10, dessen Flüssigkeitsverteiler für mindestens einen elementaren Motor Inaktivierungsmittel aufweist, die in der Lage sind, letzteren kontinuierlich mit der Hauptleitung zu verbinden, die einen Druck aufweist, der aus dem niedrigsten Druck und dem höchsten Druck der Hauptleitungen ausgewählt ist.

12. Kreislauf gemäß Anspruch 11, dessen elementare Motoren Untermotoren desselben Motors sind, und dessen Inaktivierungsmittel Mittel zum Erfassen der Drehrichtung des Motors umfassen, wobei der ausgewählte Druck entsprechend der Drehrichtung des Motors und der Richtung einer auf den Motor angewandten Geschwindigkeits- oder Beschleunigungssteuerung gewählt wird.

13. Kreislauf gemäß einem der Ansprüche 1 bis 12, dessen Steuerungssystem (40) in der Lage ist, die Ventilmittel (34, 36) so zu steuern, dass die Drehrichtung eines Abtriebselementes des Motors umgekehrt wird, ohne die Ein- und Ausgangsrichtung der Flüssigkeit im Motor umzukehren.

14. Kreislauf gemäß einem der Ansprüche 1 bis 13, wobei das Steuerungssystem (40) in der Lage ist, die Ventilmittel (34, 36) so zu steuern, dass die Drehrichtung eines Abtriebselementes des Motors während einer Umkehrung der Ein- und Ausgangsrichtung der Flüssigkeit durch den Motor konstant gehalten wird.

15. Kreislauf gemäß einem der Ansprüche 1 bis 14, wobei
- mindestens ein erster elementarer Motor mit einem ersten Bewegungselement eines Fahrzeugs gekoppelt ist und
- mindestens ein zweiter elementarer Motor mit einem zweiten Bewegungselement eines Fahrzeugs gekoppelt ist,
wobei das Steuerungssystem des ersten Motors in der Lage ist, eine Drehung des ersten Motors und damit des ersten Bewegungselementes mit einer anderen oder entgegengesetzt gerichteten Geschwindigkeit als die des zweiten Bewegungselementes zu steuern.

16. Kreislauf gemäß einem der Ansprüche 1 bis 15, ferner umfassend zwei Druckspeicher und umfassend mindestens vier Hauptleitungen und wobei
zwei erste Hauptleitungen mit den beiden Druckspeichern verbunden werden können,
zwei zweite Hauptleitungen mit einer anderen Druckflüssigkeitsquelle als den Druckspeichern verbunden werden können,
die Ventilmittel in der Lage sind, die sekundären Gehäuse der elementaren Motoren einer ersten Gruppe von elementaren Motoren mit den ersten Hauptleitungen zu verbinden, und die sekundären Gehäuse anderer elementarer Motoren, die eine zweite Gruppe von elementaren Motoren bilden, mit den zweiten Hauptleitungen zu verbinden.

## Claims

1. A hydraulic transmission circuit comprising at least two main ducts (26, 28) respectively for fluid feed and for fluid discharge;
the hydraulic transmission circuit further comprising:
• at least first and second elementary hydraulic motors (12, 14, 16; 112, 114; 312, 314, 316; 506, 508; 602, 604, 606, 608) that are associated for procuring a common drive, each elementary motor having two secondary enclosures (25, 27; 125, 127, 135, 137; 340, 342, 344, 346; G1, G2, G3, G4), one for feed and one for discharge;
• a fluid distributor (30, 130) for distributing the fluid from said main ducts to said elementary motors via their secondary enclosures; and
• a control system (40) for controlling the elementary motors;
wherein the fluid distributor has valve means (34, 36; 134, 136, 138, 140) connected to the two secondary enclosures of the first elementary motor;
the hydraulic transmission circuit being **characterized in that**:
- said valve means are suitable for putting each of the secondary enclosures of the first elementary motor (12, 112, 312) into communication with either one of the main ducts, independently of the other secondary enclosure; and
- the control system (40) is suitable for piloting the valve means in such a manner that, in an operating mode of the circuit, two elementary motors deliver torque in opposite directions.

2. A circuit according to claim 1, wherein the control system includes an activation table that specifies and makes it possible to determine the operating modes of the various elementary motors (12, 14, 16) as a function of a desired cylinder capacity, each operating mode being chosen from among drive, opposing, and inactive.

3. A circuit according to claim 1 or claim 2, wherein the control system (40) is suitable for automatically effecting a plurality of cylinder capacity changes in a predefined order, as a function at least of a speed of rotation of the motor and of a speed or acceleration setpoint transmitted to the control system (40).

4. A circuit according to any one of claims 1 to 3, wherein the fluid distributor has at least two first distribution valves (34, 36) connected to respective ones of the two secondary enclosures (25, 27) of the first elementary motor (12), each first distribution valve being suitable for putting the secondary enclosure to which it is connected into communication with one or the other of the main ducts (26, 28) independently of the other first valve.

5. A circuit according to claim 4, wherein the secondary enclosures (340) of at least two elementary motors (312, 314, 316) are interconnected and suitable for being connected to the main ducts (326, 328) via a single common distribution valve (325).

6. A circuit according to any one of claims 1 to 5, wherein said first and second elementary motors (12, 14, 16) are sub-motors of the same motor, and are secured to a common outlet member (18).

7. A circuit according to any one of claims 1 to 5, wherein the first and second elementary motors (602, 604) drive respective ones of two distinct outlet members.

8. A circuit according to any one of claims 1 to 8, wherein the first elementary motor (112) has a cylinder capacity that is different from the cylinder capacity of another elementary motor (114).

9. A circuit according to any one of claims 1 to 8, wherein, Cyl1 being the cylinder capacity of the first elementary motor, Cyl2 being the combined cylinder capacity of the other elementary motors, and a cylinder capacity of the circuit being equal to the sum of the cylinder capacities of the elementary motors, the control system (40) is suitable for controlling the valve means in three operating modes in which a cylinder capacity of the circuit is equal respectively to Cyl2+Cyl1, Cyl2 and Cyl2-Cyl1, respectively for the drive mode, for the inactive mode and for the opposing mode of the first elementary motor.

10. A circuit according to any one of claims 1 to 9, wherein the elementary motors are constant-velocity motors.

11. A circuit according to any one of claims 1 to 10, wherein the fluid distributor has, for at least one elementary motor, inactivation means suitable for connecting said elementary motor in continuous manner to the main duct having a pressure chosen from among the lower pressure and the higher pressure of the main ducts.

12. A circuit according to claim 11, wherein the elementary motors are sub-motors of the same motor, and the inactivation means include means for detecting the direction of rotation of the motor, said chosen pressure being selected as a function of the direction of rotation of the motor and of the direction of a speed command or of an acceleration command that is applied to the motor.

13. A circuit according to any one of claims 1 to 12, wherein the control system (40) is suitable for operating the valve means (34, 36), in such a manner as to reverse the direction of rotation of an outlet member of the motor without reversing the input and output directions of the fluid in the motor.

14. A circuit according to any one of claims 1 to 13, wherein the control system (40) is suitable for operating the valve means (34, 36) in such a manner as to maintain the direction of rotation of an outlet member of the motor constant, during a reversal of input and output directions in which the fluid is input and output through the motor.

15. A circuit according to any one of claims 1 to 14, wherein:
• at least one first elementary motor is coupled to a first movement member for moving a vehicle; and
• at least one second elementary motor is coupled to a second movement member for moving a vehicle;
said control system of the first motor being suitable for causing the first motor to rotate, and thus for causing the first movement member to rotate, at a speed that is different from the speed of the second movement member or in a direction that is opposite from the direction of the second movement member.

16. A circuit according to any one of claims 1 to 15, further including two pressure accumulators; including at least four main ducts; and wherein:
two first main ducts are suitable for being connected to said two pressure accumulators;
two second main ducts are suitable for being connected to a pressurized fluid source other than said pressure accumulators;
the valve means are suitable for connecting the secondary enclosures of the elementary motors of a first group of elementary motors to the first main ducts, and for connecting the secondary enclosures of other elementary motors constituting a second group of elementary motors to the second main ducts.
